# EUROPEAN PATENT APPLICATION

(11) **EP 2 230 433 A2**
(43) Date of publication of application: **22.09.2010**
(21) Application number: 10250485.9
(22) Date of filing: 15.03.2010
(51) Int. Cl.: F16L 11/08

(54) **Hose**

(30) Priority: 16.03.2009 GB 0904497; 11.11.2009 GB 0919750
(71) Applicant: BPP Technical Services Ltd., London, EC2V 5DE (GB)
(72) Inventor: Ong, Chuon-Szen, London SE26 5LG (GB)
(74) Representative: Curtis, Philip Anthony

(57) **Abstract**

A hose 10 comprising an inner elongate supporting member 12 arranged along the length of the hose, the supporting member having a plurality of coils arranged in a substantially helical configuration; a tubular reinforcing/sealing layer 100 disposed around the supporting member 12; and a coil retaining means 14 adapted to prevent coils of the supporting member 12 from moving apart relative to one another.

## Description

This invention relates to hose. More particularly, the invention relates to hose suitable for conveying industrial fluids on a large scale, such as conveying oil and/or gas and/or liquefied gas from an oil and/or gas reservoir; conveying oil and /or gas and/or liquefied gas to or from an oil or gas storage facility; or conveying oil and/or gas and/or liquefied gas around a petroleum refinery. The hose may also be suitable for fluid transfers in marine environments in a floating or aerial configuration, and for the transfer of fluids between vessels or between vessels and land based terminals.

The hose according to the invention is suitable for conveying fluids at extreme temperatures, such as elevated temperatures, such as above 100°C or above 250°C; or low temperatures, including cryogenic temperatures, such as below 0°C, below -100°C or below -250°C. The hose according to the invention is also useful for conveying corrosive fluids.

It is well known to use hose for the large scale transport of fluids. There are primarily three types of conventional hose available for this purpose:
1. Rubber hose, which comprises layers of rubber material reinforced with steel.
2. Bellows hose, which comprises a corrugated layer and a reinforcing layer (see, for example, US2004112454).
3. Composite hose, which comprises a flexible tubular layer disposed between inner and outer helical supporting coils (see for example EP0076540 and WO01/96772).

We have now found a new way to construct a hose, which provides advantages over the conventional rubber, bellows and composite hose.

According to one aspect of the invention there is provided a hose comprising an inner elongate supporting member arranged along the length of the hose, the supporting member having a plurality of coils arranged in a substantially helical configuration; and a tubular reinforcing/sealing layer disposed around the supporting member.

The supporting member should be made of a material having the physical properties needed to support the other layers of the hose. The supporting member may be a metal, such as steel, or may be a polymer material. Preferably the supporting member is stainless steel. The supporting member is preferably in the form of a wire.

It is a specific feature of the present invention that there is only one coiled supporting member in the hose, i.e., the usual second coil present in composite hose is not present.

In a particularly advantageous embodiment of the invention, the hose further comprises a coil retaining means adapted to prevent coils of the supporting member from moving apart relative to one another. Most preferably, the arrangement is such that the coil retaining means prevents immediately adjacent coils from moving relative to one another to the extent of hose collapse. Movement of adjacent coils relative to one another is allowed within the confines of operational flexibility of the hose, but the crossing over or direct contact of one coil by an adjacent coil is prevented.

In composite hose, inner and outer supporting coils are provided, spaced a 1/2 pitch relative one another, and the two coils, together with the hose layers, serve to prevent the coils from displacing, although there can sometimes be jumping of the coils under extreme conditions. In accordance with the present invention, the outer coil can be dispensed with, because the coil retaining means serves to prevent displacement of the coils, and thereby prevents the hose structure from collapsing; it also eliminates the problem of jumping.

In its most basic form, the coil retaining means simply comprises a retaining material which is secured to one coil of the supporting means and also secured to another, preferably adjacent, coil of the supporting means, the arrangement being such that the length of the retaining material between the coils is substantially the same as the spacing between the two coils, so that if a force is applied to move the coils apart, the retaining material goes into tension to prevent the coils moving apart. It follows that the retaining material should be strong enough to withstand the forces which, in use, would act to move the coils apart, and should be highly resistant to stretching. It is preferred that the retaining material is flexible and is made from materials compatible with the supporting member and the transported fluid.

In a preferred embodiment, the coil retaining means comprises an elongate strip of retaining material arranged to follow the coils. The retaining material is folded around the coils, and the side edges of the retaining material are secured to a part of the retaining material that is folded around another coil of the support member. This serves to prevent the two coils from moving apart relative to one another. The retaining material can be secured by any convenient means, such as by adhesive, by stitching and so on.

The retaining means folded around one coil is preferably secured to the retaining means around an immediately adjacent coil, but this is not essential, i.e., the retaining means could instead be secured to the retaining means around a non-adjacent coil.

The coil retaining means is preferably a flexible fabric suitable for the intended product use. Suitable examples include fabric made from UHMWPE such as Dyneema which is the current fabric, but any fabric that has the mechanical properties and flexibility can be considered, such as fabrics from aramid-based polymers, polyesters such as PET, molecularly aligned polymers, etc.

The tubular reinforcing/sealing layer preferably comprises a plurality of discrete layers, which will now be described. Each layer can be made up of several wraps of the materials used in each layer, for example, 2, 3, 4 or more wraps.

In a preferred embodiment, a first, internal, reinforcing layer is disposed around, and adjacent to, the underlying layer (which is preferably the supporting member and retaining means, which are together known as the 'carcass'). The first reinforcing layer is preferably wound around the supporting member and retaining means (the "carcass"), most preferably in a spiral configuration. Most preferably, the first reinforcing layer comprises a plurality of strips of material wound around the supporting member. The first reinforcing layer is preferably a fabric, more preferably a woven fabric. The first reinforcing layer may be made of a material compatible with the hose application. For example, the first reinforcing layer may be made of a UHMWPE, such as Dyneema; an aramid-based polymer; a polyester, such as PET; molecularly aligned polymers; and so on.

The first reinforcing layer provides reinforcement for the hose structure and additionally provides abrasion protection for other layers (particularly the sealing layer described below) from the supporting member. The lay angle for these strips will be as is appropriate for the materials and intended application. This angle could be from 1 to 89 degrees from the hose axis. A lay angle of from 5° to 30° from the hose axis is preferred.

In a preferred embodiment, a sealing layer is disposed around, and adjacent to, the underlying layer (which is preferably the first reinforcing layer). The sealing layer is preferably wound around the first reinforcing member, most preferably in a spiral configuration. Most preferably the sealing layer comprises a plurality of strips of material wound around the first reinforcing layer. The sealing layer is preferably formed of a polymeric material, such as a thermoplastic fluoropolymer, for example, fluorinated ethylene propylene. Thus, the sealing layer most preferably comprises a plurality of thermoplastic strips spirally wound around the first reinforcing member. The sealing layer functions essentially along the principles of the well-known labyrinth seal concept. The sealing layer prevents fluid flow therethrough, thereby ensuring that the fluid is constrained to flow within the hose. In many embodiments, the sealing layer also serves as a pressure barrier. The lay angle for these strips will be as is appropriate for the materials and intended application. This angle could be from 1° to 89°, preferably 40° to 50° from the hose axis.

In a preferred embodiment, a second, outer, reinforcing layer is disposed around, and adjacent to, the underlying layer (which is preferably the sealing layer). The second reinforcing layer is preferably wound around the sealing layer, most preferably in a spiral configuration. Most preferably the second reinforcing layer comprises a plurality of strips of material wound around the sealing layer. The second reinforcing layer is preferably a fabric, more preferably a woven fabric. The second reinforcing layer may be made of a material compatible with the hose application. For example, the second reinforcing layer may be made of a UHMWPE, such as Dyneema; an aramid-based polymer; a polyester, such as PET; molecularly aligned polymers; and so on.

The second reinforcing layer may be made of the same material as the first reinforcing layer and may have substantially the same structure. The lay angle for these strips will be as is appropriate for the materials and intended application. This angle could be from 1° to 89°, preferably 50° to 80° from the hose axis.

In a preferred embodiment, a binding fabric layer is disposed around, and adjacent to, the underlying layer (which is preferably the second reinforcing layer). The binding fabric layer comprises fabric strips that are spirally wound around the second reinforcing layer at a very steep angle, to prevent lateral sliding of the outermost part of the windings of the second reinforcing layer. The binding fabric layer strips are preferably about half as wide as the width of the underlying strips.

In another embodiment, the binding layer may consist of fabric cord, metallic cord or polymer cord. The lay angle for these strips will be as is appropriate for the materials and intended application. This angle could be from 1° to 89°, preferably 55° to 85° from the hose axis.

In a preferred embodiment, an insulating layer is disposed around, and adjacent to, the underlying layer (which is preferably the binding fabric layer). The insulating layer may comprise strips of polymer and/or fabric which are spirally wound around the underlying layer. The purpose of the insulating layer is to provide heat insulation between the underlying layers and the external part of the hose, therefore the material should have good insulating properties.

Instead of the insulating layer, or in addition to it, there may also be a buoyancy layer disposed around the underlying layer (which might be the binding layer or the insulating layer). The buoyancy layer comprises strips of a low density material spirally wound around the underlying layer. The buoyancy layer preferably has a density lower than the density of water and of the other layers, to help the hose float in water.

In a preferred embodiment, a further reinforcing layer is disposed around the underlying layer (which may be the binding layer, the insulating layer or the buoyancy layer). The purpose of the further reinforcing layer is to provide an abrasion resistant exterior for the hose and/or to provide axial strengthening. In an embodiment, the further reinforcing layer may be a braid.

The hose according to the invention has a number of advantages over the hose according to the prior art. The hose according to the invention does not require an external helical wire; no outer retaining wire is needed for structural stability. Unlike bellows hose, the hose according to the invention does not require a corrugated layer. Unlike rubber hose, the hose according to the invention does not require a rigid rubber/steel carcass.

Furthermore the structure of the supporting member provides for a relatively smooth inner bore for fluid transfer, and removes, or at least substantially reduces, the risk that part of the inner wire becomes dislodged during high fluid flow rates.

Because there is only one helical support, the fabric/wire pitch is not dependent on the overall hose thickness, which provides a lot more flexibility in the selection of hose thickness compared with composite hose.

The hose according to the invention may be made in any suitable length. The hose is preferably relatively large bore, and typically has an internal diameter of at least 50mm, more usually at least 100mm, at least 200mm or at least 300mm. The upper diameter may be, for example, 500mm or 600mm.

In another aspect, the invention relates to a method of manufacturing hose.
This method is applicable to the hose described above, and also to other forms of hose. According to this aspect of the invention, the hose is constructed by applying the layers as the hose is moved in a substantially vertical axis in a direction along the longitudinal axis of the hose.

Each layer may be applied by rotating the said layer around the hose.

In a preferred embodiment, each layer to be applied is provided on a support, which is preferably in the form of a turntable. As mentioned above, each layer can be applied by rotation of the support or by rotation of the hose.

By using a vertical manufacturing arrangement, any issues relating to the application of the hose layers using uneven tensions can be more easily addressed. Vertical orientation of the hose during construction is also beneficial because it stops the hose structure from sagging due to its own weight, which causes problems when the central hose axis is horizontal and the hose is improperly supported.

This manufacturing arrangement preferably involves multiple supports, spaced vertically apart. The first of these supports is typically for constructing the hose supporting member and the retaining means (the "carcass"). Subsequent supports may be provided for the formation of reinforcing, sealing, binding, insulating and buoyancy layers, as required by the particular hose specifications. Other layers not specified here may also be applied at this time.

As mentioned above, it is preferred that each support is in the form of a rotatable turntable. Each turntable preferably has an aperture in the middle, through which the hose passes during construction. The arrangement is such that the axis of rotation of each turntable is the same as the central hose axis. The direction of rotation of each turntable may be changed, depending upon hose specifications.

The hose carcass should be constructed before the outer layers of the hose are applied to it. In a preferred embodiment, the carcass is produced through the use of a bonding unit that brings together the carcass components while rotating through a construction plane that is perpendicular to the hose axis. The bonding unit comprises some or all of the equipment necessary for constructing the carcass. The materials to be used for the supporting member and the retaining means are arranged in such a way that they can be fed into or adjacent to the bonding unit throughout the carcass construction process.

In this preferred embodiment, the bonding unit serves to arrange the supporting member inside a fold of the retaining means and to bond this fold of the retaining means, along with the supporting member within, to itself and to an adjacent fold of the retaining means that has already become a part of the hose carcass. Pre-forming of the supporting member and the retaining means can also occur at the bonding unit. Rollers and tensioners can be used to guide and support the retaining means and supporting member as they are transferred from their storage reels to the bonding unit.

The materials required for the bonding of the retaining means, such as adhesives, curing agents or stitching systems, may also be located in or on the bonding unit.

The carcass construction is performed in such a way that the completed carcass travels laterally away from the construction plane and the bonding unit, without rotating about the hose axis. The completed carcass is then preferably spooled onto a drum.

After the hose carcass has been completely manufactured and spooled, it is fed through the rest of the manufacturing process, for the application of subsequent layers.

These subsequent layers are most preferably applied using one or a series of turntables. Each turntable has a central hole located at its axis of revolution. The materials and equipment required for the application of a particular layer are mounted on top of each turntable. More specifically, the materials are preferably spooled onto drums and mounted such that they wrap around the hose when the turntable is rotated. Each turntable can hold one or several drums of material, for one or several different layers. For example, a turntable can hold 2, 5, 10 or more drums of material.

In a preferred embodiment, each turntable is arranged in such a way that the hose carcass passes vertically up through the centre of the axis of rotation of each turntable. Each strip of material to be wrapped onto the hose is fastened to it prior to beginning rotation of the turntable. The carcass, along with any subsequent layers that have been applied, then has each new layer applied to the outside of the hose whilst it is moving upwards under tension. This upwards motion combines with the rotation of the turntable around the hose to produce helical layers. The lay angle of these layers can be controlled using the translational velocity of the hose and the angular velocity of the turntable.

Any layer that does not require wrapping around the hose carcass in a helical manor may be applied using a different method. In a preferred embodiment, the layer is stored in a box, such as an accumulator, which the hose is passed through during production. The box may or may not be located on a turntable and may or may not be rotating during application of the layer. The layer is fastened to the hose and drawn out of the box and onto the exterior of the hose as the structure moves through the box.

The hose may undergo a single pass of the turntable/s during the application of all of the desired layers, or may be spooled on to a drum during the process and returned through the turntable/s for multiple passes. After all the layers have been applied to the hose structure, the hose may be spooled onto a drum and the end fittings may be applied.

Reference is now made to the accompanying drawings, in which:

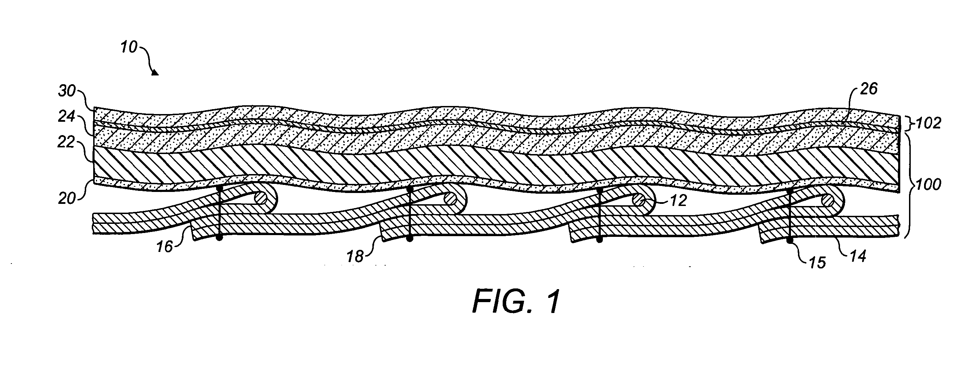

Fig. 1, which is a cross-sectional view through the wall of a hose according to the invention;
Fig. 2 is a schematic view showing a method of constructing a hose; and
Fig. 3 is a schematic view showing a method of constructing a hose carcass.

In the drawing, a hose is generally designated 10. It will be appreciated that the structure of the hose is cylindrical, and the drawing shows a cross-section of the hose wall structure. The hose will also have end fittings at each end thereof, but these have not been described, as they may be conventional. Alternatively, the end fitting may be as described in our copending UK patent application of even date entitled "Hose End Fitting."

The hose comprises an inner portion 100 comprising layers 12, 14, 20, 22, 24 and 26 and an outer portion 102 comprising layer 30. These layers will be described in more detail below.The hose comprises an inner helical supporting member 12. The purpose of the supporting member 12 is to provide strength and rigidity to the hose structure and also to support the other layers described below.

The hose 10 further includes a coil retaining means 14, which is an elongate strip of retaining material arranged to follow the coils of the supporting member 12. The retaining material 14 is folded around the coils, and the side edges 16 and 18 of the retaining material 14 are secured to a part of the retaining material that is folded around another coil of the supporting member, for example by stitching 15. This serves to prevent the two coils from moving apart relative to one another.

A first reinforcing layer 20 is disposed around the supporting member 12 and retaining means 14 (the "carcass"). The first reinforcing layer 20 comprises a plurality of strips of flexible fabric, spirally wound around the supporting member 12.

A sealing layer 22 is disposed around the first reinforcing layer 20. The sealing layer 22 comprises strips of thermoplastic, spirally wound around the first reinforcing layer 20, whereby the sealing layer 22 provides an effective fluid barrier preventing the passage of fluids thereacross.

A second reinforcing layer 24 is disposed around the sealing layer 22. The second reinforcing layer 24 comprises a plurality of strips of flexible fabric, spirally wound around the sealing layer 22.

A binding fabric layer 26 is disposed around the second reinforcing layer 24.
The binding fabric layer 26 comprises narrow fabric strips that are spirally wound around the second reinforcing layer 24 at a very steep angle, to prevent lateral sliding of the outermost part of the windings of the second reinforcing layer 24 and the layers beneath.

An insulating layer 28 is disposed around the binding fabric layer 26. The insulating layer 28 comprises strips of polymer and/or fabric which are spirally wound around the binding fabric layer 26.

Instead of the insulating layer 28, or in addition to it, there may also be a buoyancy layer (not shown) disposed around the underlying layers.

A further reinforcing layer 30 is disposed around the insulating layer 28.

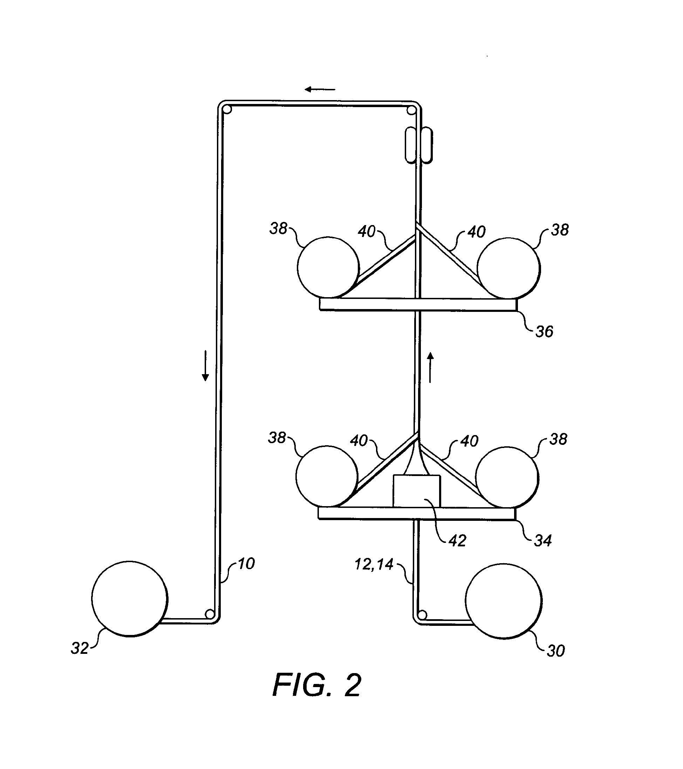

With reference to Fig. 2, the hose carcass 12/14 is spooled on a first drum 30 from where it is fed to a second drum 32. Two rotatable turntables 34 and 36 are arranged in the path of the carcass 12/14. Each turntable 34 and 36 contains drums 38, on which is spooled material 40 to be wrapped around the carcass 12/14.

An accumulator box 42 is provided to apply material 40 which does not require winding around the carcass 12/14.

As the hose carcass 12/14 is wound from the first drum 30 onto the second drum 32, the turntables 34 and 36 rotate and thereby apply the material 40 to the carcass 12/14. The material 40 can represent, for example, the layers 20, 22, 24, 26 and 28 described above.

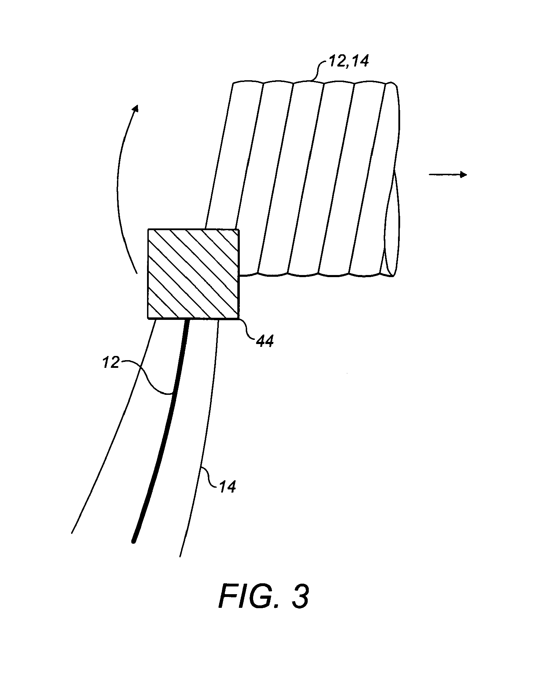

The carcass 12/14 may be formed using a turntable structure similar to that shown in Fig. 2. The details of the structure of the apparatus used to form the carcass are shown in Fig. 3.

In Fig. 3, the supporting member 12 and the retaining means 14 are fed to a bonding unit 44, which rotates about the carcass 12/14. The bonding unit 44 serves to wind the supporting member 12 around the carcass 12/14 and also effects the encasement of the retaining means 14 within the supporting member 12. Again, the carcass 12/14 moves along the hose axis, while the bonding unit 44 rotates.

When the carcass 12/14 is complete it is wound onto the first drum 30, or alternatively it can be fed straight to the turntable 34.

It will be appreciated that the invention described above may be modified within the scope of the following claims.

## Claims

1. A hose comprising an inner elongate supporting member arranged along the length of the hose, the supporting member having a plurality of coils arranged in a substantially helical configuration; a tubular reinforcing/sealing layer disposed around the supporting member; and a coil retaining means adapted to prevent coils of the supporting member from moving apart relative to one another.

2. Hose according to claim 1, which has only one coiled supporting member.

3. Hose according to claim 1 or 2, wherein the coil retaining means comprises a retaining material which is secured to one coil of the supporting means and also secured to another, preferably adjacent, coil of the supporting means, the arrangement being such that the length of the retaining material between the coils is substantially the same as the spacing between the two coils, so that if a force is applied to move the coils apart, the retaining material prevents the coils moving apart.

4. Hose according to claim 1 or 2, wherein the coil retaining means comprises an elongate strip of retaining material arranged to follow the coils.

5. Hose according to claim 4, wherein the retaining material is folded around the coils, and the side edges of the retaining material are secured to a part of the retaining material that is folded around another coil of the coiled supporting member, whereby the two coils are prevented from moving apart relative to one another.

6. Hose according to any preceding claim, wherein the tubular reinforcing/sealing layer preferably comprises a plurality of discrete layers.

7. Hose according to any preceding claim wherein the tubular reinforcing/sealing layer comprises a first reinforcing layer disposed around, and adjacent to, the supporting member and retaining means.

8. Hose according to claim 7, wherein the tubular reinforcing/sealing layer comprises a sealing layer disposed around, and adjacent to, the first reinforcing layer.

9. Hose according to claim 8, wherein the tubular reinforcing/sealing layer comprises a second reinforcing layer disposed around, and adjacent to, the sealing layer.

10. Hose according to claim 9, wherein the tubular reinforcing/sealing layer comprises a binding layer disposed around, and adjacent to, the second reinforcing layer.

11. Hose according to claim 10, wherein the tubular reinforcing/sealing layer comprises an insulating layer disposed around the underlying layers.

12. Hose according to claim 10 or 11, wherein the tubular reinforcing/sealing layer comprises a buoyancy layer disposed around the underlying layers.

13. Hose according to claim 10, 11 or 12, wherein the tubular reinforcing/sealing layer comprises a further reinforcing layer disposed around the underlying layers.

14. A method of producing self-supporting hose carcass continuously without restriction on the length of the carcass as herein described.

15. A method of producing long lengths of hose (i.e. greater than 100m) using the herein described hose production system.
